# EUROPÄISCHE PATENTSCHRIFT

(11) **EP 2 070 735 B1**
(45) Veröffentlichungstag und Bekanntmachung des Hinweises auf die Patenterteilung: **28.07.2010**
(21) Anmeldenummer: 08020161.9
(22) Anmeldetag: 19.11.2008
(51) Int. Cl.: B60C 27/10

(54) **Spannvorrichtung für eine Reifenkette**
Tension device for a wheel chain
Dispositif de serrage pour une chaîne de pneu

(30) Priorität: 13.12.2007 DE 102007060617
(43) Veröffentlichungstag der Anmeldung: 17.06.2009
(73) Patentinhaber: RUD Ketten Rieger & Dietz GmbH u. Co. KG, 73432 Aalen (DE)
(72) Erfinder: Rieger, Hansjörg, 73431 Aalen (DE); Kaiser, Helmut, 73457 Aalen-Essingen (DE)
(74) Vertreter: Grünecker, Kinkeldey, Stockmair & Schwanhäusser Anwaltssozietät

(56) Entgegenhaltungen:
- EP-A- 0 835 770
- DE-U1-202004 012 076

## Beschreibung

Die Erfindung betrifft eine Spannvorrichtung für eine Reifenkette mit wenigstens zwei In einem Gehäuse beweglich angeordneten Spannorganen, wenigstens einem mit den Spannorganen verbundenen Arretierorgan, mit wenigstens zwei mit der Reifenkette verbindbaren Spannsträngen, die jeweils in einer Ausziehrichtung aus und in einer Spannrichtung in das Gehäuse bewegbar mit einem der Spannorgane verbunden sind, mit einem beweglich am Gehäuse angebrachten, von Hand betätigbaren und mit dem Arretierorgan verbundenen Betätigungsorgan, das von einer Ausziehstellung, in der durch das Arretierorgan eine Bewegung der Spannstränge in die Spannrichtung gemeinsam blockiert ist, in eine Spannstellung, in der durch das Arretierorgan eine Bewegung der Spannstränge in die Ausziehrichtung gemeinsam blockiert ist, überführbar ausgestaltet ist.

Reifenketten für Kraftfahrzeuge werden eingesetzt, um bei einem durch Schneefall, Eis oder lose Erde nachgiebigen Untergrund Schlupf oder ein Gleiten des Reifens auf der Fahrbahn zu verhindern.

Reifenketten werden üblicherweise über einen oder mehrere Spannstränge auf dem Reifen befestigt, die an der Flanke des Reifens oder an der Außenseite der Felge durch eine oder mehrere Spannvorrichtungen gespannt werden. Ein bekanntes Problem bei der Montage von Reifenketten ist, dass diese nach dem Anlegen im Stand oft nur unzureichend auf dem Rad zentriert sind und dadurch die Spannung im Kettennetz nach dem Anfahren nachlässt. Daraus ergibt eine ungenügende Fixierung der Kette, die zu einer Beschädigung des Fahrzeugs oder zum Verlust der Kette führen kann sich Aus diesem Grund werden Spannvorrichtungen verwendet, die sich mittels einer auf den Spannstrang in Spannrichtung wirkenden, vorgespannten Feder selbsttätig nachspannen.

Spannvorrichtungen für Reifenketten sind beispielsweise aus der EP 0 255 119 A2 bekannt. Ein sich über den Umfang der Flanke eines Fahrzeugreifens erstreckender Spannstrang ist bei montierter Reifenkette in einer Sperrvorrichtung geführt, die ein Durchziehen des Spannstranges in Spannrichtung erlaubt und entgegen der Spannrichtung sperrt. Ein an dem Spannstrang separat zu montierendes, in Spannrichtung wirkendes Federelement sorgt bei einem Betrieb der Reifenkette für eine Aufrechterhaltung der Spannung Im Spannstrang.

Die in der WO 98/39168 A1 beschriebene Spannvorrichtung weist eine in Spannrichtung vorgespannte Wickeleinrichtung für einen Spannstrang auf, die über ein Betätigungselement entgegen der Spannrichtung blockiert oder freigegeben werden kann. Damit eine Reifenkette am gesamten Umfang des Reifens anliegt und um eine gleichmäßige Spannung in dem Kettennetz zu erreichen, ist es üblich, zwei oder mehr Spannstränge mit der Reifenkette zur verbinden. Bei Spannvorrichtungen mit nur einem Spannstrang werden in diesem Fall, wie in der WO 98/39168 A1 gezeigt, mehrere Spannvorrichtungen für die Montage einer Reifenkette benötigt.

Auch die WO 2004/022364 A1 zeigt den Einsatz von zwei separaten Spannvorrichtungen mit jeweils einem Spannstrang zum Montieren einer Reifenkette. Für eine gleichmäßigere Spannung im Kettennetz werden die Spannstränge durch erfindungsgemäße Umlenkelemente umgelenkt.

Eine Spannvorrichtung mit einer vorgespannten Wickeleinrichtung für einen Spannstrang, der in Ausziehrichtung oder in Spannrichtung freigegeben oder blockiert werden kann, ist aus der US 2003/0102065 A1 ist bekannt. Um die Bewegung des Spannstrangs in eine Richtung blockieren zu können, während die Bewegung in die entgegengesetzte Richtung jeweils freigegeben ist, sind an dem Aufwickelelernent zwei gegenläufige Sperrverzahnungen vorgesehen, in die jeweils ein Schnapphebel einrasten kann. Soll eine Drehrichtung der Wickeleinrichtung freigegeben werden, kann über einen Schalter der Schnapphebel, der die Bewegung in Spannrichtung sperrt, oder der Schnapphebel, der die Bewegung entgegen der Spannrichtung sperrt, aus der Sperrverzahnung ausgelenkt werden.

Eine Spannvorrichtung mit vier Spannsträngen ist aus der US 6,619,353 B1 bekannt. Die Spannstränge sind durch ein Getriebe miteinander verbunden, das deren gleichzeitige Verkürzung über ein zentrales Betätigungselement ermöglicht. Die Spannstränge treten sternförmig aus dem Gehäuse der Spannvorrichtung und werden bei der Montage einer Gleitschutzvorrichtung jeweils um die gleiche Länge verkürzt. Um eine gleichmäßige Spannung in allen Spannsträngen zu erreichen, wird die Spannvorrichtung im Radmittelpunkt angeordnet. Nachdem über das Betätigungselement die für die Montage der Reifenkette notwendige Spannung aufgebracht wurde, kann das als Hebel ausgestaltete Betätigungselement in eine Öse eingehakt und dadurch arretiert werden. Eine mit dem Betätigungselement verbundene Feder ermöglicht eine Vorspannung bei der Montage, die ein Lockern der Reifenkette während des Betriebes verhindert.

Eine ähnliche Vorrichtung mit mehreren Spannsträngen ist in der EP 0 835 770 A1 beschieben. Die Vorrichtung weist zusätzlich Federelemente auf, die eine Vorspannung der Wickeleinrichtungen ermöglichen, sowie eine Sperreinrichtung, die ein Zurückziehen der Spannstränge verhindert.

Eine gattungsbildende Spannvorrichtung mit zwei Spannsträngen, die mit zwei in Aufwickelrichtung vorgespannten Aufwickelrollen verbunden sind, ist aus der EP 1 621 369 B1 bekannt. Die Spannvorrichtung kann über einen Betätigungsschalter von einer Ausziehstellung, in der die Spannstränge über einen Hebel abgewickelt werden können, in eine Spannstellung, in der die Spannstränge durch eine in Aufwickelrichtung vorgespannte Spiralfeder in das Gehäuse der Spannvorrichtung gezogen werden, überführt werden.

Nachteilig ist der große Bedienaufwand, der durch eine Vielzahl von Bedienelementen und anzuordnenden Verbindungselementen entsteht. Insbesondere Gleitschutzketten werden oft bei schlechten Wetterverhältnissen und Temperaturen unter dem Gefrierpunkt benötigt. Neben schlechten Sichtverhältnissen durch Schneefall oder Dunkelheit kann auch die Beweglichkeit des Anwenders durch Winterbekleidung eingeschränkt sein. Aus diesem Grund ist eine einfache Bedienbarkeit einer Spannvorrichtung von besonderer Bedeutung.

Werden Spannvorrichtungen mit mehreren Spannsträngen verwendet, sind die Spannvorrichtungen bei der Montage so anzuordnen, dass mit der Verkürzung der über ein Getriebe verbundenen Spannstränge eine gleichmäßige Spannung in der Reifenkette entsteht. Dies hat den Nachteil, dass eine gleichmäßige Spannung der Reifenkette nicht immer gewährleistet ist. Insbesondere bei Spannvorrichtungen, die an einem festen Punkt, beispielsweise über einen Haken, an der Reifenkette befestigt werden, ergibt sich der Nachteil, dass ein bereits gespannter, verhakter oder verklemmter Spannstrang ein weiteres Spannen der anderen Spannstränge verhindert.

Folglich liegt der Erfindung die Aufgabe zugrunde, eine Spannvorrichtung mit mehreren Spannsträngen zu entwickeln, die ein gleichmäßiges Spannen einer Reifenkette mit nur einer Spannvorrichtung, unabhängig von der Anordnung der Spannvorrichtung bei der Montage, ermöglicht. Die Spannvorrichtung soll ferner trotz der harten Einsatzbedingungen eine hohe Zuverlässigkeit aufweisen und robust gegen Verschmutzungen sein.

Diese Aufgabe wird erfindungsgemäß für eine Spannvorrichtung der eingangs genannten Art dadurch gelöst, dass die Spannorgane in der Ausziehstellung in Ausziehrichtung und in der Spannstellung in Spannrichtung unabhängig voneinander beweglich ausgestaltet sind.

Durch die unabhängige Beweglichkeit der Spannorgane ergibt sich der Vorteil, dass die Spannstränge unabhängig voneinander gespannt werden können. Bei dem Spannen der Spannstränge kann so nicht ein bereits gespannter, verhakter oder verklemmter Spannstrang die Spannung der übrigen Spannstränge begrenzen. Ein weiterer Vorteil ist die Robustheit der erfindungsgemäßen Spannvorrichtung, die sich aus der Redundanz ergibt, welche aufgrund der unabhängigen Funktionsweise der Spannorgane entsteht. Ist ein Spannorgan aufgrund äußerer Einwirkung, beispielsweise aufgrund von Verschmutzungen, blockiert, ist die Funktion der anderen Spannorgane dadurch nicht beeinträchtigt. Auch bei einem Defekt eines Spannorgans kann die Spannung im Kettennetz durch die anderen, noch funktionierenden Spannorgane erhalten werden. Vorteilhaft ist zudem die Möglichkeit, die Spannstränge vor dem Spannen der Reifenkette nacheinander aus dem Gehäuse der Spannvorrichtung zu ziehen. Die für die Vorspannung der Spannorgane vorgesehenen Federelemente können auf diese Weise nacheinander vorgespannt werden und der Benutzer muss bei dem Ausziehen der Spannstränge nur die Spannkraft für ein Spannorgan aufbringen. Auf diese Weise können in der erfindungsgemäßen Spannvorrichtung auch Spannorgane mit einer größeren Vorspannung eingesetzt werden.

Diese erfindungsgemäße Lösung kann mit den folgenden weiteren jeweils für sich vorteilhaften Ausgestaltungen beliebig kombiniert und weiter verbessert werden:
In einer vorteilhaften Ausgestaltung können alle Betätigungsvorgänge an der Spannvonlchtung über ein Betätigungsorgan ausgeführt werden. Während in einer Ausziehstellung des Betätigungsorgans sämtliche Spannstränge ausgezogen werden können, ist die Bewegung der Spannstränge in Spannrichtung blockiert. In einer Spannstellung des Betätigungsorgans können beide Spannstränge gespannt werden, während eine Bewegung in Ausziehrichtung blockiert ist. Die Betätigung über ein Betätigungsorgan hat den Vorteil, dass sämtliche Betätigungsvorgange auch mit einer Hand ausgeführt werden können, während die andere Hand zum Beispiel für das Richten der Reifenkette zur Verfügung steht. Das Betätigungselement kann kipp- öder drehbar ausgestaltet werden, wobei eine Drehbewegung des Betätigungselementes mit einer Einschraubbewegung ergänzt werden kann.

Neben der Ausziehstellung und der Spannstellung des Betätigungsorgans kann zusätzlich eine Bremsstellung vorgesehen werden, in der an dem Betätigungsorgan angeordnete, jeweils einem Spannorgan zugeordnete Bremsflächen auf an den Spannorganen angeordneten Reibflächen aufliegen. Eine über das Betätigungsorgan auslösbare Bremse ist insbesondere dann von Vorteil, wenn der Benutzer über die Spannvorrichtung während des Anlegens der Reifenkette Kräfte auf die Spannstränge ausüben möchte, um diese in Position zu bringen. Ist die Spannvorrichtung so ausgestaltet, dass sie sich selbsttätig spannt, kann die auf die Spannorgane wirkende Bremse dazu verwendet werden, ein unkontrolliertes Aufwickeln der Spannorgane zu vermeiden. So wird die Gefahr verringert, dass sich der Benutzer bei einer zu schnellen Bewegung der Spannstränge verletzt.

Die Spannstellung des Betätigungsorgans kann zwischen der Bremsstellung und der Ausziehstellung angeordnet sein. Auf diese Weise kann das Betätigungselement von der Ausziehstellung mit einer Bewegung über die Spannstellung in die Bremsstellung überführt werden. Dies ermöglicht ein kontrolliertes Einziehen der Spannstränge, ohne dass weitere Bedienelemente benötigt werden. Als weitere Verbesserung kann ein Federelement vorgesehen sein, das in Bremsstellung auf das Betätigungselement einwirkt, so dass dieses nach dem Wegnehmen der durch den Benutzer aufgebrachten Bremskraft In die Spannstellung zurückbewegt wird.

In einer weiteren vorteilhaften Ausgestaltung können auf dem Betätigungsorgan Markierungen oder Zeichen vorgesehen sein, die dem Benutzer der Spannvorrichtung deutlich machen, ob sich die Spannvorrichtung in der Ausziehstellung, der Spannstellung oder der Bremsstellung befindet. Die Markierungen oder Zeichen können so auf dem Betätigungsorgan angeordnet sein, dass sie in der zugeordneten Stellung des Betätigungsorgans mit einer Gehäusekante oder einem am Gehäuse angebrachten Zeiger fluchten. Wird das Betätigungsorgan bei einem Wechsel von der Ausziehstellung in die Spannstellung oder bei einem Wechsel von der Spannstellung in die Ausziehstellung in das Gehäuse bewegt, können die Markierungen so angeordnet sein, dass sie in der Ausziehstellung außerhalb des Gehäuses und in der Spannstellung innerhalb des Gehäuses liegen oder, bei einer entgegengesetzten Bewegung des Betätigungsorgans, in der Ausziehstellung innerhalb und in der Spannstellung außerhalb des Gehäuses.

Gemäß einer möglichen vorteilhaften Ausgestaltung der Spannvorrichtung können die Spannorgane als Rollen ausgestaltet sein, die in dem Gehäuse drehbar gelagert sind und jeweils einen Spannstrang aufnehmen. Diese Ausführungsform hat den Vorteil, dass auch längere Spannstränge auf sehr engem Raum aufgenommen werden können, wodurch eine deutlich kompaktere Konstruktion der Spannvorrichtung ermöglicht wird. Für eine Vorspannung der Rollen in Auszieh- oder in Spannrichtung können Federelemente, vorzugsweise Spiralfedern vorgesehen sein, die ein Drehmoment auf die Rollen übertragen, das sich an dem Gehäuse abstützt. Die Vorspannung kann über eine Bewegung der Spannorgane aufgebaut werden, indem diese in Auszieh- oder in Spannrichtung bewegt werden. Beispielsweise kann die Spannvorrichtung so ausgestaltet sein, dass ein Ausziehen der Spannstränge aus dem Gehäuse der Spannvorrichtung die Federelemente vorspannt, so dass bei einer Überführung der Spannvorrichtung in die Spannstellung die Spannstränge automatisch in das Gehäuse der Spannvorrichtung eingezogen werden.

Für eine Arretierung der Spannorgane kann in einer verbesserten Ausgestaltung jedem Spannorgan ein Arretierorgan zugeordnet werden. Das Arretierorgan kann so in dem Gehäuse angeordnet sein, dass es sich mit einem Spannorgan form- oder reibschlüssig im Eingriff befindet. Durch eine bewegliche Lagerung des Arretierorgans entlang einer Verschiebestrecke im Gehäuse kann erreicht werden, dass bei einer Bewegung des Spannorgans in Ausziehrichtung oder in Spannrichtung das Arretierorgan ausgelenkt und damit die Bewegung des Spannorgans freigegeben ist. Erst die Blockade eines Arretierorgans führt dann zu einer Bewegungssperre des Spannorgans.

Bei kreisförmigen, drehbar gelagerten Spannorganen ist eine geradlinige Verschiebestrecke der Arretierorgane möglich, die tangential zu den Spannorganen verläuft. Auf diese Weise entfernt sich das Arretierorgan bei einer Verschiebung von dem jeweiligen Spannorgan und der Form- oder Reibschluss zwischen Arretierorgan und Spannorgan wird gelöst. Die Verschiebestrecke der Arretierorgane kann alternativ bogenförmig gestaltet ist, so dass für das Auslenken der Arretierorgane notwendige Verschiebestrecke verkürzt ist.

Für eine Rückführung des Arretierorgans in die Arretierposition, nachdem das Arretierorgan ausgelenkt wurde, ist es vorteilhaft, wenn eine auf das Arretierorgan einwirkende Arretierfeder vorgesehen ist, deren Wirkrichtung in Richtung der Arretierposition weist.

Die Bewegung des Arretierorgans kann beispielsweise durch ein Anschlagelement blockiert werden, das in die Verschiebestrecke des Arretierorgans verschoben wird. Ein direkt mit dem Betätigungsorgan verbundenes Anschlagelement kann über eine Dreh- oder Kippbewegung des Betätigungsorgans in die Verschiebestrecke eingebracht werden. Wird das Arretierorgan nur in einer Richtung blockiert, ist die Bewegung des Spannorgans in einer Richtung gesperrt. In der anderen Richtung kann das Arretierorgan weiterhin mit der Bewegung des Spannorgans aus seiner Verschiebestrecke bewegt werden, das heißt die Bewegung des Spannorgans ist in die andere Richtung weiterhin freigegeben. Die Kombination eines Spannorgans mit einem beidseitig blockierbaren Arretierorgan erfüllt also die Funktion eines Freilaufs, dessen freigegebene Verschiebe- oder Drehrichtung über eine einseitige Blockade der Bewegung des Arretierorgans umgekehrt werden kann.

Um die Anschlagelemente über die Bewegung des Betätigungsorgans in die oder aus der Verschiebestrecke des Arretierorgans bewegen zu können, kann ein Kurvengetriebe zwischen dem Betätigungselement und den Anschlagelementen angeordnet sein. Beispielsweise kann eine mit dem Betätigungsorgan verbundene Kurve die Bewegung des Betätigungsorgans umformen und über Abtaster auf die Anschlagelemente übertragen, so dass die Anschlagelemente im wesentlichen senkrecht zur Verschiebestrecke des Arretierorgans bewegt werden.

Um die Bewegung der Anschlagelemente in dem Gehäuse der Spannvorrichtung zu führen, können diese in Führungsbahnen, entlang welcher sie die Verschiebestrecke des Arretierorgans schneiden, verschiebbar gelagert sein. Es ist von Vorteil, wenigstens ein Federelement vorzusehen, das auf die Anschlagelemente wirkt und diese in die Verschiebestrecke bewegt, um das Arretierorgan zu blockieren, oder das die Anschlagelemente aus der Verschiebestrecke bewegt, um eine Verschiebung des Arretierorgans zu ermöglichen. Auf diese Weise können die Anschlagelemente in einer Ruheposition gehalten werden, aus der sie bei einer Bewegung des Betätigungsorgans ausgelenkt werden.

Alternativ können die Anschlagelemente über eine in dem Gehäuse angeordnete Wippe miteinander verbunden sein, so dass in der einen Stellung der Wippe ein Anschlagelement in der Verschiebestrecke des Arretierorgans angeordnet ist, während das andere Anschlagelement auf der anderen Seite der Arretierposition außerhalb der Verschiebestrecke liegt.

In einer vorteilhaften Ausgestaltung kann das Betätigungselement verschiebbar in dem Gehäuse gelagert werden, so dass die Spannstellung, die Ausziehstellung sowie die möglicherweise vorgesehene Bremsstellung durch drei Verschiebepositionen des Betätigungsorgans einstellbar sind. Wird das Betätigungsorgan mit einer Kurve versehen, die in Verschieberichtung einen veränderliche Höhe aufweist, kann die Transversalbewegung des Betätigungsorgans nach Art eines Kurvengetriebes auf in dem Gehäuse angeordnete Abtaster übertragen werden. Sind diese Abtaster direkt mit den Anschlagelementen verbunden, kann auf diese Weise die Spannstellung und die Ausziehstellung der Spannvorrichtung eingestellt werden.

Es ist vorteilhaft, wenigstens eine Raste an dem Betätigungselement vorzusehen, die in der Ausziehstellung oder der Spannstellung an einer in dem Gehäuse vorgesehenen Gegenraste einrastet. Auf diese Weise kann die Ausziehstellung oder die Spannstellung durch den Benutzer eindeutig eingestellt werden. Vorteilhaft ist es, die Gegenraste an dem Anschlagelement vorzusehen, da dieses die Spannstellung bzw. die Ausziehstellung kennzeichnet. Sind Anschlagelement und Betätigungsorgan über ein Kurvengetriebe miteinander gekoppelt, ist es besonders vorteilhaft, wenn die Raste und die Gegenraste ein Bestandteil des Kurvengetriebes sind. Auf diese Weise kann eine besonders einfache Konstruktion ermöglicht werden, die auf zusätzliche Teile für die Raste bzw. die Gegenraste verzichtet.

In einer weiteren vorteilhaften Ausgestaltung ist jedes Spannorgan mit einem Federelement ausgestattet, das unabhängig von den anderen Spannorganen eine Vorspannung in Auszieh- oder in Spannrichtung ermöglicht. Sind die einzelnen Spannorgane durch ihnen zugeordnete Federelemente einzeln vorspannbar, kann einen unabhängige Nachstellung der Spannorgane nach der Montage der Reifenkette ermöglicht werden.

In einer weiteren vorteilhaften Ausgestaltung der Spannvorrichtung kann ein Haken an dem Gehäuse vorgesehen werden, über den die Spannvorrichtung nach der Montage der Reifenkette an der Reifenkette arretiert wird. Der Haken ermöglicht insbesondere bei einer Spannvorrichtung mit nur zwei Spannsträngen eine Befestigung der Spannvorrichtung im montierten Zustand an wenigstens drei Punkten. Dadurch wird eine übermäßige Bewegung der Spannvorrichtung während der Fahrt vermieden und die Spannkräfte können insbesondere bei nur zwei Spannsträngen besser über den Radumfang in das Kettennetz eingeleitet werden.

Die Krafteinleitung über die Spannstränge in das Kettennetz kann weiter verbessert werden, indem die Spannstränge zueinander entgegengesetzt verlaufend angeordnet werden. Dies ermöglicht, insbesondere bei einer geraden Anzahl von Spannsträngen, eine direkte Kraftleitung der durch die Spannvorrichtung aufgebrachten Spannkräfte in das Kettennetz. Werden außerdem die Spannorgane zu beiden Seiten des Betätigungsorgans angeordnet, ermöglicht der entgegengesetzte Verlauf der Spannstränge eine verbesserte Zugänglichkeit des Betätigungsorgans. Verlaufen die beiden Spannstränge zu beiden Seiten des Betätigungsorgans entgegengesetzt aus dem Gehäuse der Spannvorrichtung, kann der Benutzer ohne eine räumliche durch die Spannorgane ungestört auf das Betätigungselement zugreifen. Zudem vereinfacht die Anordnung der Spannorgane zu beiden Seiten des Betätigungsorgans die Betätigung aller Spannorgane durch ein Betätigungsorgan, da dieses so durch eine einfache Verschiebe- oder Drehbewegung an sämtlichen Spannorganen für eine direkte Betätigung der Arretierorgane bzw. der Anschlagelemente vorbeigeführt werden kann.

Die Zugänglichkeit des Betätigungselementes sowie die konstruktive Gestaltung des Betätigungsmechanismus kann durch einen symmetrischen Aufbau der Spannvorrichtung weiter verbessert werden, indem die Spannvorrichtung symmetrisch zu einer durch das Betätigungsorgan verlaufenden Achse gestaltet wird.

Im Folgenden wird die Erfindung anhand eines Ausführungsbeispiels mit Bezug auf die Figuren beispielhaft erläutert. Dabei stellt das beschriebenen Ausführungsbeispiel lediglich eine mögliche Ausgestaltung dar, die für den jeweiligen Anwendungsfall modifiziert werden kann. Einzelne für sich vorteilhafte Merkmale können gemäß der obigen Beschreibung der vorteilhaften Ausgestaltungen der beschriebenen Ausführungsform hinzugefügt oder weggelassen werden.

Es zeigen:
- Fig. 1: eine schematische Perspektivansicht der erfindungsgemäßen Spannvorrichtung,
- Fig. 2: eine Explosionsdarstellung der erfindungsgemäßen Spannvorrichtung,
- Fig. 3: eine schematische Draufsicht der erfindungsgemäßen Spannvorrichtung bei ge- öffnetem Gehäuse,
- Fig. 4: eine zweite schematische Draufsicht der erfindungsgemäßen Spannvorrichtung bei geöffnetem Gehäuse,
- Fig. 5: eine schematische Draufsicht eines Spannorgans mit zugeordnetem Arretieror- gan,
- Fig. 6: eine schematische Seitenansicht des Betätigungsorgans mit einem Arretierorgan und mit Anschlagelementen.

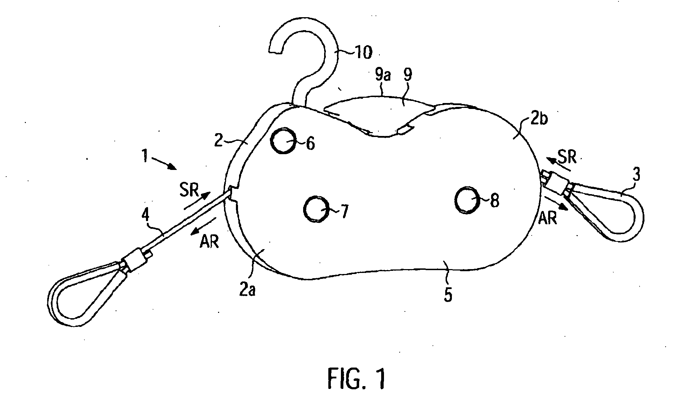

Zunächst wird der Aufbau einer erfindungsgemäßen Spannvorrichtung mit Bezug auf das Ausführungsbeispiel der Figur 1 beschrieben. Die Spannvorrichtung 1 weist ein flaches, aus zwei Gehäuseteilen 2. 5 zusammengesetztes Gehäuse 2, 5 auf, mit einer nierenförmigen Kontur, die zwei teilweise kreisförmige Segmente 2a, 2b umfasst. Das Gehäuse 2, 5 kann aus Kunststoff gefertigt sein oder für die Aufnahme höherer Kräfte auf gleichem oder kleinerem Raum aus metallischen Werkstoffen. An den entlang der längeren Seite der Spannvorrichtung gegenüberliegenden Außenseiten treten ein vorzugsweise kürzerer Spannstrang 3 sowie ein vorzugsweise längerer Spannstrang 4 aus dem Gehäuse. Die Länge der Spannstränge 3, 4 kann einer vorbestimmten Position der Spannvorrichtung 1 an der Reifenkette angepasst werden. Ist ein Spannstrang 3, 4 bei montierter Reifenkette aufgrund der Kettengeometrie näher an der Spannvorrichtung 1 befestigt, kann durch eine Verkürzung dieses Spannstrangs erreicht werden, dass die Spannstränge 3, 4 beim Spannen der Reifenkette um gleichgroße Beträge in die Spannvorrichtung 1 gezogen werden. Dadurch ergibt sich bei einer Verwendung von Federelementen für die Vorspannung ein gleichgroßer Federweg für beide Spannorgane und damit eine gleichgroße Spannung in den Spannsträngen 3, 4.

Das Gehäuse besteht aus zwei Teilen 2, 5, die über Nieten 6, 7, 8 miteinander verbunden sind. Alternativ können die Gehäuseteile 2 und 5 miteinander verschraubt, verklebt, verschweißt oder über Schnappverbindungen miteinander verbunden werden. Mittig zwischen den kreisförmigen 2a, 2b Segmenten ist das Betätigungsorgan 9 angeordnet, über das eine Ausziehstellung, eine Spannstellung sowie eine Bremsstellung eingestellt werden kann. In der Ausziehstellung können die Spannstränge 3, 4 in Ausziehrichtung AR aus dem Gehäuse 2, 5 bewegt werden, in der Spannstellung in Spannrichtung SR.

Das Betätigungsorgan 9 weist außerhalb des Gehäuseteils 2 eine Verbreiterung auf, die im wesentlichen senkrecht zur Betätigungsrichtung eine zylindrische Teilfläche 9a umfasst. Über die Fläche 9a bringt der Benutzer die Kraft auf, welche das Betätigungsorgan 9 in die Spannstellung und anschließend in die Bremsstellung überführt. Die dem Gehäuseteil 2 zugewandten Flächen der Verbreiterung sind der Außenkontur des Gehäuseteils 2 angepasst, so dass die Verbreiterung in der Bremsstellung an der Außenfläche des Gehäuseteils 2 anliegt und einen Anschlag bildet. In der in Fig. 1 dargestellten Spannstellung und insbesondere in der Bremsstellung bildet die zylinderförmige Teilfläche der Verbreiterung einen fließenden Übergang zu den zylinderförmigen Randflächen der kreisförmigen Segmente 2a, 2b des Gehäuseteils 2. Auf diese Weise kann der Benutzer insbesondere bei schlechten Sichtverhältnissen leicht ertasten, in welcher Stellung sich das Betätigungsorgan befindet. Die Spannvorrichtung 1 weist einen an dem Gehäuse 2, 5 befestigten Haken 10 auf, der bei der Montage der Reifenkette in die Reifenkette eingehängt werden kann. Die Spannstränge 3, 4 treten schräg aus dem Gehäuse 2, 5 aus, im Wesentlichen in eine von dem Haken 10 weg führende Richtung, so dass bei einer Zugbelastung der Spannstränge 3, 4 auch der im Kettennetz eingehängte Haken 10 auf Zug belastet wird.

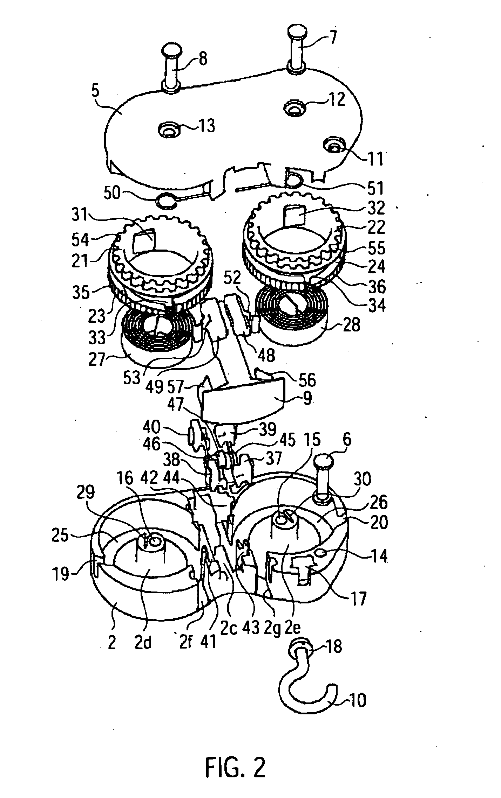

Figur 2 zeigt das Ausführungsbeispiel in einer Explosionsansicht. Das Gehäuseteil 5 weist Durchgangsbohrungen 11, 12, 13 auf, die mit Durchgangsbohrungen 14, 15, 16 im Gehäuseteil 2 fluchten. Das Gehäuseteil 2 sowie das Gehäuseteil 5 werden im montierten Zustand über die Nieten 6, 7, 8 zusammengehalten, welche die Bohrungen 11, 12, 13 im Gehäuseteil 5 sowie die Bohrungen 14, 15, 16 im Gehäuseteil 2 durchdringen und beidseitig gestaucht sind. Die Nieten 7, 8 sind in den Drehachsen der Spannorgane 21, 22 angeordnet, wodurch eine kompaktere Gestaltung der Spannvorrichtung 1 möglich wird.

In dem Gehäuseteil 2 ist eine Aussparung 17 vorgesehen, über die eine formschlüssige Verbindung hergestellt mit dem Haken 10 werden kann. Die Kontur der Aussparung entspricht dem gestauchten Ende des Hakens 10 mit einer auf den Haken 10 aufgeschobenen Unterlegscheibe 18. Bei demontiertem Gehäuseteil 5 kann der Haken 10 in die Aussparung 17 eingelegt werden. Eine Zugbelastung des Hakens 10 wird dann im Wesentlichen über eine Unterlegscheibe 18 auf das Gehäuseteil 2 übertragen, während das montierte Gehäuseteil 5 ein Herausfallen des Hakens 10 aus seiner Aufnahme 17 verhindert.

Für die Aufnahme der Spannstränge 3, 4 sind in dem Gehäuseteil 2 im Bereich der kreisförmigen Segmente 2a, 2b Aussparungen 19, 20 vorgesehen, durch welche die Spannstränge 3, 4 die Wand des Gehäuseteils 2 durchdringen. Die Spannstränge 3, 4 werden durch Spannorgane 21, 22 in das Gehäuse 2, 5 der Spannvorrichtung gezogen, die in diesem Ausführungsbeispiel als Rollen 21, 22 ausgestaltet sind. Die Spannstränge werden auf die Rollen 21, 22 aufgewickelt, die für eine Aufnahme der Spannstränge 3, 4 umlaufende Nuten 23, 24 aufweisen. Die Rollen 21, 22 sind in dem Gehäuseteil 2 in Aussparungen 2d, 2e aufgenommen und in kreisförmigen Vertiefungen 25, 26 drehbar gelagert. Um die Rollen in Spannrichtung vorspannen zu können, sind diese über Federelemente 27, 28, in dem Ausführungsbeispiel als Spiralfedern 27, 28 ausgestaltet, mit dem Gehäuseteil 2 verbunden. Für eine Übertragung der Federkräfte sind die innenliegenden Enden der Spiralfedern 27, 28 in dem Gehäuseteil 2 in Schlitze 29, 30 eingelegt, während sie sich in den Rollen an Fortsätzen 31, 32 abstützen. Zur eine formschlüssigen Befestigung der Spannstränge 3, 4 an den Rollen 21, 22 sind auf der Unterseite der Rollen hier nicht dargestellte Aussparungen eingearbeitet, in die hier ebenfalls nicht dargestellte, mit den Enden der Spannstränge 3, 4 durch Pressen, Löten oder Anschrauben verbundene Nippel eingelegt werden. Um die Spannstränge 3, 4 von der Unterseite der Rollen 21, 22 in die Nuten 23, 24 zu führen, sind Aussparungen 33, 34 vorgesehen, welche die untere Seitenwand der Nuten 23, 24 durchbrechen. Beide Rollen 21, 22 sind an ihrem Umfang mit Reibungsflächen 35, 36 versehen, die für eine erhöhte Reibung ein Oberflächenprofil aufweisen.

Zwischen den Spannorganen 21, 22 ist das Betätigungsorgan 9 verschiebbar in dem Gehäuse 2, 5 gelagert. Für die Aufnahme des Betätigungsorgans 9 ist in dem Gehäuseteil 2 ein Schacht 2c vorgesehen, der beide für die Aufnahme der Spannorgane 21, 22 vorgesehenen Aussparungen 2d, 2e schneidet. Zu beiden Seiten des Schachtes sind Kanäle 2f, 2g angeordnet, welche an dem Betätigungsorgan 9 angeordnete Bremsfortsätze 56, 57 aufnehmen. Die Kanäle 2f, 2g bilden einen Durchbruch zu den Aussparungen 2d, 2e, in denen die Spannorgane 21, 22 aufgenommen werden. Bei montierter Spannvorrichtung 1 dringen die Bremsfortsätze 56, 57 mit einer Bewegung des Betätigungsorgans 9 In die Bremsstellung durch die Kanäle 2f, 2g zu den Reibflächen 35, 36 an den Spannorganen 21, 22 vor.

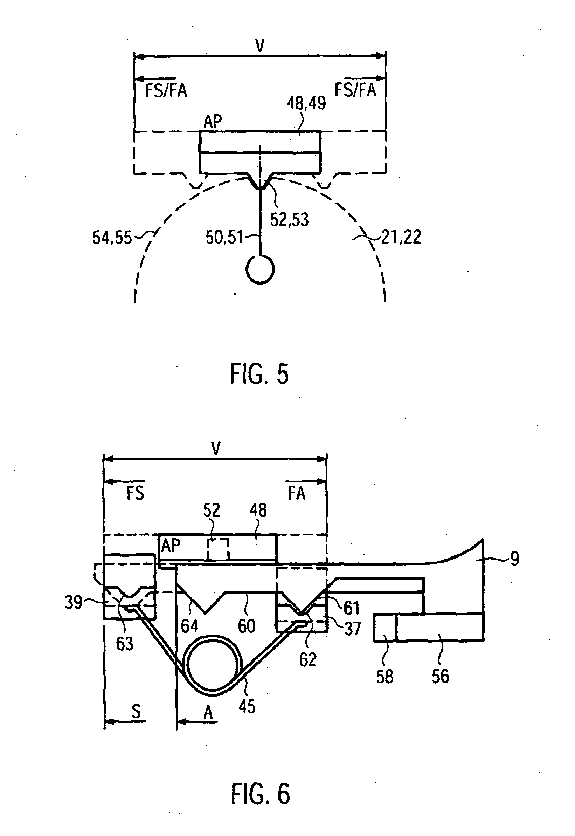

Das Betätigungsorgan 9 wirkt je nach dem, ob es sich in Auszieh- oder in Spannstellung befindet, auf die Anschlagelemente 37, 38 oder die Anschlagelemente 39, 40 ein. Die Anschlagelemente 37, 38, 39, 40 sind in dem Gehäuseteil 2 in Führungsschienen 41, 42, 43, 44 parallel zu den Drehachsen der Rollen 21, 22 beweglich gelagert. Auf die Anschlagelemente 37, 39 wirkt ein Federelement 45, das diese in Richtung einer in Figur 5 und Figur 6 dargestellten Verschiebestrecke V in dem Gehäuseteil 5 drückt, in der die Arretierorgane 48, 49 verschiebbar gelagert sind. Entsprechend wirkt auf die Anschlagelemente 38, 40 ein Federelement 46. Beide Federelemente 45, 46, die in diesem Ausführungsbeispiel als Posthomfedem 45, 46 ausgeführt sind, werden über einen Federhalter 47 formschlüssig in dem Gehäuseteil 2 gehalten.

Alternativ können die Anschlagelemente 37, 38, 39, 40 über wenigstens eine in dem Gehäuse angeordnete Wippe miteinander verbunden sein, so dass in der einen Stellung der Wippe ein Anschlagelement 37, 38, 39, 40 in der Verschiebestrecke des Arretierorgans angeordnet ist, während das andere Anschlagelement 37, 38, 39, 40 auf der anderen Seite der Arretierposition außerhalb der Verschiebestrecke liegt.

An dem Gehäuseteil 5 sind Arretierfedern 50, 51 befestigt, die in die Arretierorgane 48, 49 eingreifen und diese in einer Arretierposition halten. Die Arretierfedern 48, 49 sind zu Schenkelfedern 48, 49 ausgestaltet. Alternativ können Schraubenfedern oder Blattfedern verwendet werden, die dann entsprechend ihrer Wirkrichtung im Gehäuse 2, 5 anzuordnen sind. Die Arretierorgane 48, 49 weisen Zähne 52, 53 auf, die in der Arretierposition der Arretierorgane 48, 49 in an den Rollen 21, 22 angeordneten Zahngrenzen 54, 55 eingreifen. So greift das Arretierorgan 48 in seiner Arretierposition in den Zahnkranz 54 ein, während das Arretierorgan 49 in seiner Arretierposition in den Zahnkranz 55 eingreift.

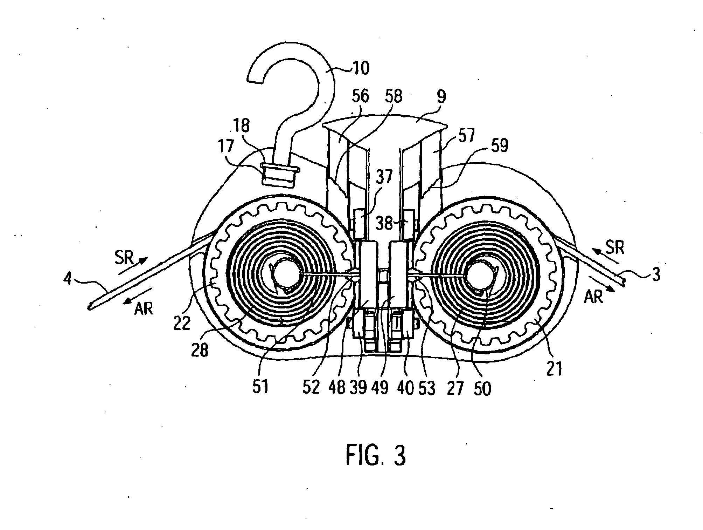

Figur 3 zeigt das Ausführungsbeispiel in der Ausziehstellung ohne Gehäuseteil 5. Das Betätigungsorgan 9 umfasst Bremsfortsätze 56, 57, an deren Enden Bremsflächen 58, 59 angeordnet sind. Die Bremsfortsätze 56, 57 bilden für das Betätigungsorgan 9 eine zusätzliche Führung, weiche die Bewegung des Betätigungsorgans 9 von der Ausziehstellung in die Spannstellung stabilisiert. In der dargestellten Ausziehstellung drückt das Betätigungsorgan 9 die Anschlagelemente 37, 38 aus der Verschiebestrecke V der Arretierorgane 48, 49 hinaus, wodurch diese entlang der hier nicht dargestellten Führungsbahn im Gehäuseteil 5 in Ausziehrichtung AR der Spannstränge verschiebbar sind. In Figur 3 ist gezeigt, dass die Aussparungen 19, 20, welche die Spannstränge 3, 4 in das Gehäuse 2, 5 der Spannvorrichtung führen, im Wesentlichen tangential zur den für die Aufnahme der Spannstränge 3, 4 vorgesehenen Nuten 23, 24 verlaufen. Dadurch wird bei gespannten Spannsträngen 3, 4 eine Umlenkung über die Aussparungen 19, 20 vermieden und die über die Spannorgane 21, 22 aufgebrachten Spannkräfte gelangen unvermindert bis zur Reifenkette.

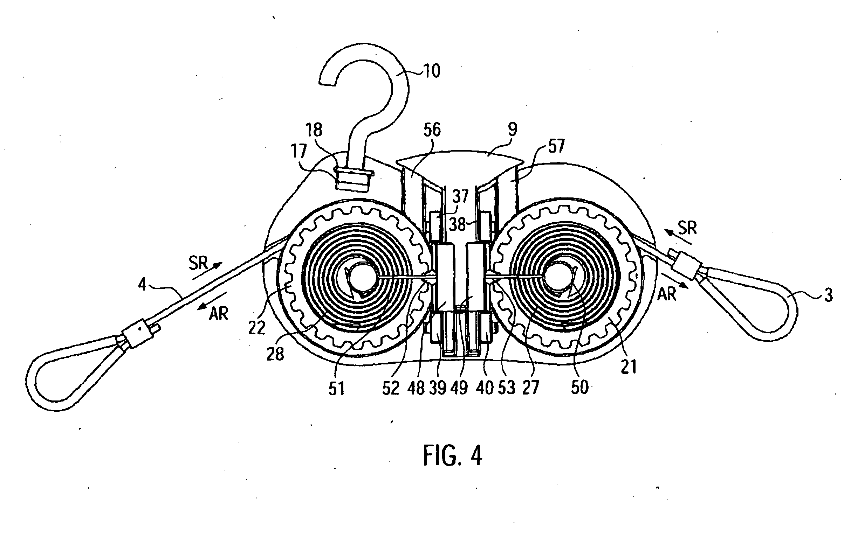

Figur 4 zeigt das Ausführungsbeispiel in der Spannstellung ohne Gehäuseteil 5. Das Betätigungsorgan 9 ist in der Spannstellung in das Gehäuseteil 2 hineingeschoben. In dieser Position des Betätigungsorgans 9 werden die Anschlagelemente 39, 40 entlang ihrer jeweiligen Führungsbahnen 43, 44 aus der Verschiebestrecke V der Arretierorgane 48, 49 hinausgedrückt, wodurch die Arretierorgane 48, 49 in Spannrichtung verschoben werden können. Wird das Betätigungsorgan 9 durch den Benutzer über die Spannstellung hinaus in das Gehäuse 2, 5 gedrückt, liegen die Bremsflächen 58, 59 an den Reibflächen 35, 36 an. Der Benutzer kann durch einen dosierten Druck auf das Betätigungsorgan 9 eine Bremswirkung an den vorgespannten Spannorganen 21, 22 erzielen, um in der Spannstellung die Spannstränge 3, 4 kontrolliert in das Gehäuseteil 2 einziehen zu lassen.

Figur 5 zeigt in Draufsicht ein Spannorgan 21, 22 mit einem Arretierorgan 48, 49, dessen Zahn 52, 53 in den Zahnkranz 54, 55 des Spannorgans 21, 22 eingreift. Bis auf die im Eingriff befindliche Zahnlücke ist der Zahnkranz 54, 55 vereinfachend mit einer den Kopfkreis abbildenden, gestrichelten Linie dargestellt. Die Darstellung bezieht sich auf beide in der Spannvorrichtung 1 sich spiegelbildlich gegenüberliegenden Arretierorgane 48.

In das Arretierorgan 48, 49 greift eine Arretierfeder 50, 51 ein, die formschlüssig und drehfest in dem hier nicht dargestellten Gehäuseteil 5 befestigt ist. Das Arretierorgan 48, 49 kann durch das Spannorgan 21, 22 aus der Arretierposition AP in beide Richtungen entlang der Verschiebestrecke V bis zu einer Freigabeposition FS oder einer Freigabeposition FA ausgelenkt werden, in der sich jeweils der an dem Arretierorgan 48, 49 befindliche Zahn 52, 53 nicht mehr im Eingriff mit dem Zahnkranz 54, 55 befindet und damit die Bewegung des Spannorgans 21, 22 freigegeben ist. In der erfindungsgemäßen Spannvorrichtung 1 wird die Verschiebestrecke V vorzugsweise auf einer Seite des Arretierorgans 48, 49 durch ein hier nicht dargestelltes Anschlagelement 37, 38, 39, 40 blockiert. Auf diese Weise gibt das Arretierorgan 48, 49 nur eine Richtung frei und das Spannorgan 21, 22 kann in einer Richtung bewegt werden, während die andere Richtung gesperrt ist. In der Ausziehstellung des Betätigungsorgans wird die Bewegung des Spannorgans 21, 22 in Spannrichtung blockiert. Dem entsprechend ist in der Ausziehstellung die Mitnahme des Arretierorgans 48, 49 in Spannrichtung über das Anschlagelement 39, 40 blockiert. In der Spannstellung ist hingegen die Bewegung des Spannorgans 21, 22 in Ausziehrichtung gesperrt, indem eine Verschiebung des Arretierorgans 48, 49 in Ausziehrichtung durch Anschlagelemente 37, 38 blockiert ist.

Alternativ können die Arretierorgane 48, 49 in der Arretierposition AP reibschlüssig in die Spannorgane 21, 22 eingreifen, so dass auf den Zahnkranz 54, 55 an dem Spannorgan 21, 22 verzichtet werden kann. Die Arretierorgane 48, 49 können als Rollen oder Kugeln oder andere bewegliche Elemente ausgestaltet sein, die in Arretierposition AP für einen Formschluss in eine Kontur an den Spannorganen eingreifen oder für einen Reibschluss einen Druck auf die Spannorgane 21, 22 ausüben. Statt eines Zahnkranzes 54, 55 kann die Außenkontur der Spannorgane 21, 22 runde Aussparungen für die Aufnahme von kugel- oder zylinderförmigen Arretierorganen 48, 49 aufweisen oder für einen Reibschluss mit den Arretierorganen 48, 49 mit einer glatten oder profilierten Oberfläche versehen sein.

Figur 6 zeigt in Seitenansicht eine schematisches Darstellung des Betätigungsorgans 9 in Ausziehstellung mit dem Arretierorgan 48 und den Anschlagelementen 37, 39. Das Betätigungsorgan 9 kann entlang einer Betätigungsstrecke von der Ausziehstellung A in die Spannstellung S verschoben werden. Auf die Anschlagelemente 37, 39 wirkt ein Federelement 45 ein, dessen Wirkrichtung im Wesentlichen zur Verschiebestrecke V des Arretierorgans 48 weist. An der den Anschlagelementen 37, 39 zugewandten Seite des Betätigungsorgans 9 ist eine Kurve 60 vorgesehen. Die Kurve 60 ist in den Bewegungsraum der Anschlagelemente 37, 39, im Wesentlichen quer zu den Führungsbahnen 41, 42 verschiebbar und befindet sich bei einer Verschiebung des Betätigungsorgans 9 durch den Bewegungsraum der Anschlagelemente 37, 39 mit diesen in Kontakt. Die Anschlagelemente 37, 39 werden durch die Feder 45 in Richtung der Kurve 60 gedrückt und gleiten bei einer Bewegung des Betätigungsorgans 9 entlang der Kurve 60.

Das Betätigungsorgan 9 ist in Ausziehstellung A gezeigt, in der eine an dem Betätigungsorgan befindliche Raste 61 in die an dem Anschlagelement 37 befindliche Gegenraste 62 einrastet. In der Ausziehstellung A ist das Anschlagelement 37 aus der Verschiebestrecke V des Arretierorgans 48 gerückt, so dass das Arretierorgan 48 bei einer Bewegung des Spannorgans 22 in Ausziehrichtung AR bis zur Freigabeposition FA ausrückbar ist, während die Bewegung des Spannorgans 22 in Spannrichtung SR durch das Arretierorgan 48 blockiert ist. Bei einer Verschiebung des Betätigungsorgans 9 gleiten die Anschlagelemente 37, 39 mit ihren Gegenrasten 62, 63 entlang der Kurve 60. Wird das Betätigungsorgan 9 in die Spannstellung S verschoben, rastet die Raste 64 in die an dem Anschlagelement 39 befindliche Gegenraste 63 ein. In der Spannstellung S ist das Anschlagelement 39 aus der Verschiebestrecke V des Arretierorgans 48 gerückt, so dass das Arretierorgan 48 bei einer Bewegung des Spannorgans 22 in Spannrichtung AR bis zur Freigabeposition FS ausgelenkt werden kann, während eine Bewegung des Spannorgane 22 in Spannrichtung SR durch das Arretierorgan 48 blockiert ist.

Die Rasten 61, 64 sind als Fortsätze 61, 64 der Kurve 60 gebildet, während die Gegenrasten 62, 63 als Einbuchtungen an den Anschlagelementen 37, 39 gestaltet sind. Alternativ können Rasten 61, 64 als Einbuchtungen und die Gegenrasten 62, 63 als Fortsätze ausgestaltet sein. Das Betätigungsorgan 9 kann in einer weiteren Ausführungsform nur eine Raste 61, 64 aufweisen, die in der Ausziehstellung A in die Gegenraste 62 des Anschlagelements 37 und in der Spannstellung in die Gegenraste 63 des Anschlagelemente 39 einrastet. Die Gegenrasten 63, 64 können alternativ in dem Gehäuseteil 2 oder dem Gehäuseteil 5 an dem Schacht 2c angeordnet sein.

Auf dem Betätigungsorgan 9 können Markierungen oder Zeichen vorgesehen sein, die dem Benutzer der Spannvorrichtung 1 deutlich machen, ob sich die Spannvorrichtung 1 in der Ausziehstellung A, der Spannstellung S oder der Bremsstellung befindet. Die Markierungen oder Zeichen können so auf dem Betätigungsorgan 9 angeordnet sein, dass sie in der zugeordneten Stellung des Betätigungsorgans 9 mit einer Gehäusekante an dem Gehäuseteil 2 oder 5 fluchten. Wird das Betätigungsorgan 9 bei einem Wechsel von der Ausziehstellung A in die Spannstellung S in das Gehäuse 2, 5 bewegt, können die Markierungen so angeordnet sein, dass sie in der Ausziehstellung A außerhalb des Gehäuses und in der Spannstellung S innerhalb des Gehäuses 2, 5 liegen.

Im Folgenden wird kurz auf die Funktionsweise der Spannvorrichtung 1 eingegangen Nachdem die Reifenkette über den Reifen gelegt wurde, kann die Spannvorrichtung mit dem Haken 10 an der Reifenkette eingehängt werden. Vor dem Spannen der Reifenkette wird das Betätigungsorgan 9 in die Ausziehstellung A überführt. Zum Verbinden der Spannvorrichtung 1 mit dem Kettennetz müssen die Spannstränge 3, 4 nun aus dem Gehäuseteil 2 gezogen werden, bis sie an der dafür vorgesehenen Stelle des Kettennetzes eingehakt werden können. Durch das Ausziehen der Spannstränge 3, 4 werden die auf die Spannorgane 21, 22 einwirkenden Federelemente 27, 28 vorgespannt beziehungsweise die Vorspannung der Federelemente 27, 28 wird erhöht. Da die Spannstränge 3,4 unabhängig voneinander ausgezogen werden können, muss der Benutzer nur die Vorspannkraft für die Vorspannung eines Spannorgans 21, 22 aufbringen. Sind die Spannstränge 3, 4 in das Kettennetz eingehakt, überführt der Benutzer das Betätigungsorgan 9 in die Spannstellung und die vorgespannten Federelemente 27, 28 wickeln die Spannstränge 3, 4 auf die Rollen 21, 22 auf, bis die erforderliche Spannung in den Spannsträngen 3, 4 erreicht ist. Für ein kontrolliertes Einziehen der Spannstränge 3, 4 in das Gehäuseteil 2 kann der Benutzer die Spannorgane 21, 22 über das Betätigungsorgan 9 bremsen. Indem dieses über die Spannstellung S hinaus in den Schacht 2c gedrückt wird, liegen die an dem Betätigungsorgan 9 angeordneten Bremsflächen 58, 59 auf den Reibflächen 35, 36 der Spannorgane 21, 22 auf und der Benutzer erzielt, abhängig von dem Druck auf das Betätigungsorgan eine dosierte Bremswirkung. Während der Fahrt verbleibt das Betätigungselement 9 in Spannstellung S, so dass sich die bei einem Setzen der Reifenkette eventuell nachlassende Spannung im Kettennetz durch die vorgespannten Spannorgane 21, 22 automatisch nachstellt. Ein Zurückbewegen der Spannstränge 3, 4 in Ausziehrichtung AR wird durch die Arretierorgane 48, 49, die über die Anschlagelemente 37, 38 eine Bewegung der Spannorgane 21, 22 in die Ausziehrichtung AR blockieren, verhindert. Auf diese Weise können während der Fahrt auf das Kettennetz einwirkende Kräfte nicht zu einer Lockerung der Reifenkette führen.

## Patentansprüche

1. Spannvorrichtung (1) für eine Reifenkette mit wenigstens zwei in einem Gehäuse (2, 5) beweglich angeordneten Spannorganen (21, 22), wenigstens einem mit den Spannorganen (21, 22) verbundenen Arretierorgan (48, 49), mit wenigstens zwei mit der Reifenkette verbindbaren Spannsträngen (3, 4), die jeweils in einer Ausziehrichtung (AR) aus und in einer Spannrichtung (SR) in das Gehäuse (2, 5) bewegbar mit einem der Spannorgane (21, 22) verbunden sind, mit einem beweglich am Gehäuse (2, 5) angebrachten, von Hand betätigbaren und mit dem Arretierorgan (48, 49) verbundenen Betätigungsorgan (9), das von einer Ausziehstellung (A), in der durch das Arretierorgan (48, 49) eine Bewegung der Spannstränge (3, 4) in die Spannrichtung (SR) gemeinsam blockiert ist, in eine Spannstellung (S), in der durch das Arretierorgan (48, 49) eine Bewegung der Spannstränge (3, 4) in die Ausziehrichtung (AR) gemeinsam blockiert ist, überführbar ausgestaltet ist, **dadurch gekennzeichnet, dass** die Spannorgane (21, 22) in der Ausziehstellung (A) in Ausziehrichtung (AR) und in der Spannstellung (S) in Spannrichtung (SR) unabhängig voneinander beweglich ausgestaltet sind.

2. Spannvorrichtung (1) nach Anspruch 1, **dadurch gekennzeichnet, dass** das Betätigungsorgan (9) in eine Bremsstellung überführbar ist, in der an dem Betätigungsorgan (9) angeordnete, jeweils einem Spannorgan (21, 22) zugeordnete Bremsflächen (58, 59) auf an den Spannorganen (21, 22) angeordneten Reibflächen (35, 36) aufliegen.

3. Spannvorrichtung (1) nach Anspruch 1 oder 2, **dadurch gekennzeichnet, dass** die Spannstellung (S) des Betätigungsorgans (9) zwischen der Bremsstellung und der Ausziehstellung (A) angeordnet ist.

4. Spannvorrichtung (1) nach einem der oben genannten Ansprüche, **dadurch gekennzeichnet, dass** wenigstens ein in Bremsstellung auf das Betätigungsorgan (9) einwirkendes Federelement vorgesehen ist, dessen Wirkrichtung im Wesentlichen in Richtung der Spannstellung (S) verläuft.

5. Spannvorrichtung (1) nach einem der oben genannten Ansprüche, **dadurch gekennzeichnet, dass** das Betätigungsorgan (9) Bremsfortsätze (56, 57) aufweist, durch welche das Betätigungsorgan (9) zumindest abschnittsweise entlang einer Betatigungsstrecke in dem Gehäuse (2, 5) führbar ausgestaltet ist und an deren Enden Bremsflächen (58, 59) angeordnet sind.

6. Spannvorrichtung (1) nach einem der oben genannten Ansprüche, **dadurch gekennzeichnet, dass** an jedem Spannorgan (21, 22) wenigstens ein Arretierorgan (48, 49) angeordnet ist, das entlang einer eine Arretierposition (AP) aufweisenden Verschiebestrecke (V) beweglich im Gehäuse (2, 5) aufgenommen ist und in der Arretierposition (AP) sich mit dem jeweils zugeordneten Spannorgan (21, 22) form- und/oder reibschlüssig im Eingriff befindet.

7. Spannvorrichtung (1) nach Anspruch 6, **dadurch gekennzeichnet, dass** wenigstens eine auf das Arretierorgan (48, 49) einwirkend angeordnete Arretierfeder (50, 51) vorgesehen ist, deren Wirkrichtung in Richtung der Arretierposition (AP) weist.

8. Spannvorrichtung (1) nach einem der Ansprüche 6 bis 7, **dadurch gekennzeichnet, dass** wenigstens zwei Anschlagelemente (37, 38, 39, 40) vorgesehen sind, die jeweils an einer Seite der Arretierposition (AP) in die und aus der Verschiebestrecke (V) beweglich im Gehäuse (2, 5) aufgenommen sind.

9. Spannvorrichtung (1) nach einem der Ansprüche 6 bis 8, **dadurch gekennzeichnet, dass** zwischen den Anschlagelementen (37, 38, 39, 40) und dem Betätigungselement (9) ein die Bewegung des Betätigungselements (9) auf die Anschlagelemente (37, 38, 39, 40) übertragendes Kurvengetriebe angeordnet ist.

10. Spannvorrichtung (1) nach einem der Ansprüche 6 bis 9, **dadurch gekennzeichnet, dass** in der Ausziehstellung (A) das Anschlagelement (39, 40) an der einen Seite der Arretierposition (AP) in die Verschiebestrecke (V) und das andere Anschlagelement (37, 38) auf der anderen Seite der Arretierposition (AP) aus der Verschiebestrecke (V) bewegt ist.

11. Spannvorrichtung (1) nach einem der Ansprüche 6 bis 10, **dadurch gekennzeichnet, dass** in der Spannstellung (S) das andere Anschlagelement (37, 38) an der anderen Seite der Arretierposition (AP) in die Verschiebestrecke (AP) und das eine Anschlagelement (39, 40) auf der einen Seite der Arretierposition (AP) aus der Verschiebestrecke (V) bewegt ist.

12. Spannvorrichtung (1) nach einem der Ansprüche 6 bis 11, **dadurch gekennzeichnet, dass** wenigstens ein auf die Anschlagelemente (37, 38, 39, 40) einwirkendes Federelement (45, 46) vorgesehen ist, dessen Wirkrichtung im Wesentlichen in Richtung der Verschiebestrecke (V) oder in entgegengesetzter Richtung verläuft.

13. Spannvorrichtung (1) nach einem der Ansprüche 6 bis 12, **dadurch gekennzeichnet, dass** das Betatlgungselement (9) wenigstens eine Raste (61, 64) aufweist, die in der Ausziehstellung (A) und/oder der Spannstellung (S) in wenigstens eine an dem Gehause (2, 5) und/oder an dem Anschlagelement (37, 38, 39, 40) angeordneten Gegenraste (62, 63) einrastet.

14. Spannvorrichtung (1) nach einem der Ansprüche 6 bis 13, **dadurch gekennzeichnet, dass** die Raste (61, 64) oder die Gegenraste (62, 63) aus einem Teil des Anschlagelements (37, 38, 39, 40) oder des Betätigungsorgans (9) gebildet sind.

15. Spannvorrichtung (1) nach einem der Ansprüche 6 bis 14, **dadurch gekennzeichnet, dass** die Anschlagelemente (37, 38, 39, 40) über eine in dem Gehäuse (2, 5) angeordnete Wippe miteinander verbunden sind.

16. Spannvorrichtung (1) nach einem der oben genannten Ansprüche, **dadurch gekennzeichnet, dass** jedem Spannorgan (21, 22) jeweils wenigstens ein zwischen dem jeweiligen Spannorgan (21, 22) und dem Gehäuse (2, 5) angeordnetes Federelement (27, 28) zugeordnet ist, das in Spannrichtung (SR) und/oder in Ausziehrichtung (AR) vorspannbar ist.

17. Spannvorrichtung (1) nach einem der oben genannten Ansprüche, **dadurch gekennzeichnet, dass** das Betätigungsorgan wenigstens eine sich von seiner Umgebung optisch absetzende Markierung aufweist, die an wenigstens einer in der Ausziehstellung (A) außerhalb des Gehäuses (2, 5) und in der Spannstellung (S) innerhalb des Gehäuses (2, 5) liegenden Teilfläche des Betätigungsorgans () angeordnet ist.

18. Spannvorrichtung (1) nach einem der oben genannten Ansprüche, **dadurch gekennzeichnet, dass** das Gehäuse (2, 5) wenigstens eine Aufnahme (17) für einen Haken (10) aufweist.

19. Spannvorrichtung (1) nach einem der oben genannten Ansprüche, **dadurch gekennzeichnet, dass** die Spannrichtungen (SR) der Spannstränge (3, 4) im Wesentlichen zueinander entgegengesetzt verlaufen.

20. Spannvorrichtung (1) nach einem der oben genannten Ansprüche, **dadurch gekennzeichnet, dass** die Spannorgane (27, 28) zu beiden Seiten des Betätigungsorgans (9) angeordnet sind.

21. Spannvorrichtung (1) nach einem der oben genannten Ansprüche, **dadurch gekennzeichnet, dass** die Spannvorrichtung (1) bezüglich einer durch das Betätigungsorgan (9) verlaufenden Achse symmetrisch aufgebaut ist.

## Claims

1. Tensioning device (1) for a tyre chain, comprising at least two tensioning members (21, 22) arranged movably in a housing (2, 5), comprising at least one locking member (48, 49) connected to the tensioning members (21, 22), comprising at least two tensioning ropes (3, 4) which can be connected to the tyre chain and are each connected to one of the tensioning members (21, 22) in such a way as to be movable outwards in an extension direction (AR) and into the housing (2, 5) in a tensioning direction (SR), and comprising an actuation member (9), which is attached movably to the housing (2, 5), can be actuated by hand, is connected to the locking member (48, 49), and is configured to be transferred from an extension position (A), in which movement of the tensioning ropes (3, 4) in the tensioning direction (SR) is jointly blocked by the locking member (48, 49), into a tensioning position (S), in which movement of the tensioning ropes (3, 4) in the extension direction (AR) is jointly blocked by the locking member (48, 49), **characterised in that** the tensioning members (21, 22) can be moved independently of one another in the extension direction (AR) in the extension position (A) and in the tensioning direction (SR) in the tensioning position (S).

2. Tensioning device (1) according to claim 1, **characterised in that** the actuation member (9) can be shifted into a braking position, in which braking surfaces (58, 59), which are arranged on the actuation member (9) and are each associated with a tensioning member (21, 22), lie on the friction surfaces (35, 36) arranged on the tensioning members (21,22).

3. Tensioning device (1) according to either claim 1 or claim 2, **characterised in that** the tensioning position (S) of the actuation member (9) is arranged between the braking position and the extension position (A).

4. Tensioning device (1) according to any one of the preceding claims, **characterised in that** at least one spring member acting on the actuation member (9) in the braking position is provided whose effective direction extends substantially towards the tensioning position (S).

5. Tensioning device (1) according to any one of the preceding claims, **characterised in that** the actuation member (9) comprises braking projections (56, 57), by means of which the actuation member (9) is configured so as to be guided along an actuation path in the housing (2, 5), at least in portions, and on the ends of which braking surfaces (58, 59) are arranged.

6. Tensioning device (1) according to any one of the preceding claims, **characterised in that** at least one locking member (48, 49) is arranged on each tensioning member (21, 22), and is received in the housing (2, 5) in such a way as to be movable along a displacement path (V) having a locking position (AP) and in the locking position (AP) is in positive and/or frictional engagement with the respectively associated tensioning member (21, 22).

7. Tensioning device (1) according to claim 6, **characterised in that** at least one locking spring (50, 51) arranged so as to act on the locking member (48, 49) is provided whose effective direction points towards the locking position (AP).

8. Tensioning device (1) according to either claim 6 or claim 7, **characterised in that** at least two stop members (37, 38, 39, 40) are provided and are each received in the housing (2, 5) so as to be movable into and out of the displacement path (V) on one side of the locking position (AP).

9. Tensioning device (1) according to any one of claims 6 to 8, **characterised in that** a cam mechanism which transmits the movement of the actuation member (9) to the stop members (37, 38, 39, 40) is arranged between the stop members (37, 38, 39, 40) and the actuation member (9).

10. Tensioning device (1) according to any one of claims 6 to 9, **characterised in that** in the extension position (A), the first stop member (39, 40) on a first side of the locking position (AP) is moved into the displacement path (V) and the other stop member (37, 38) on the other side of the locking position (AP) is moved out of the displacement path (V).

11. Tensioning device (1) according to any one of claims 6 to 10, **characterised in that** in the tensioning position (S), the other stop member (37, 38) on the other side of the locking position (AP) is moved into the displacement path (V) and the first stop member (39, 40) on the first side of the locking position (AP) is moved out of the displacement path (V).

12. Tensioning device (1) according to any one of claims 6 to 11, **characterised in that** at least one spring member (45, 46) acting on the stop members (37, 38, 39, 40) is provided whose effective direction extends substantially towards the displacement path (V) or in the opposite direction.

13. Tensioning device (1) according to any one of claims 6 to 12, **characterised in that** the actuation member (9) comprises at least one catch (61, 64) which in the extension position (A) and/or the tensioning position (S) latches into at least one counter catch (62, 63) arranged on the housing (2, 5) and/or on the stop member (37, 38, 39, 40).

14. Tensioning device (1) according to any one of claims 6 to 13, **characterised in that** the catch (61, 64) or the counter catch (62, 63) is formed from part of the stop member (37, 38, 39, 40) or the actuation member (9).

15. Tensioning device (1) according to any one of claims 6 to 14, **characterised in that** the stop members (37, 38, 39, 40) are interconnected via a rocker arranged in the housing (2, 5).

16. Tensioning device (1) according to any one of the preceding claims, **characterised in that** at least one spring member (27, 28) in each case, arranged between the respective tensioning member (21, 22) and the housing (2, 5), is associated with each spring member (21, 22) and can be biased in the tensioning direction (SR) and/or in the extension direction (AR).

17. Tensioning device (1) according to any one of the preceding claims, **characterised in that** the actuation member comprises at least one marking which is visually contrasted with its surroundings and which is arranged on at least one partial surface, lying outside the housing (2, 5) in the extension position (A) and inside the housing (2, 5) in the tensioning position (S), of the actuation member (9).

18. Tensioning device (1) according to any one of the preceding claims, **characterised in that** the housing (2, 5) comprises at least one receptacle (17) for a hook (10).

19. Tensioning device (1) according to any one of the preceding claims, **characterised in that** the tensioning directions (SR) of the tensioning ropes (3, 4) extend in substantially opposite directions from one another.

20. Tensioning device (1) according to any one of the preceding claims, **characterised in that** the tensioning members (27, 28) are arranged on both sides of the actuation member (9).

21. Tensioning device (1) according to any one of the preceding claims, **characterised in that** the tensioning device (1) is constructed symmetrically about an axis extending through the actuation member (9).

## Revendications

1. Dispositif de tension (1) destiné à une chaîne pour pneu et comportant au moins deux organes de tension (21, 22) agencés mobiles dans une coque (2, 5), au moins un organe de blocage (48, 49) relié aux organes de tension (21, 22), au moins deux câbles de tension (3, 4) qui peuvent être reliés à la chaîne pour pneu et qui sont reliés chacun à l'un des organes de tension (21, 22) de manière à pouvoir être mobiles dans un sens d'extraction (AR) vers l'extérieur de la coque (2, 5) et dans un sens de tension (SR) vers l'intérieur de ladite coque, un organe d'actionnement (9) qui est agencé mobile sur la coque (2, 5), qui peut être actionné à la main, qui est relié à l'organe de blocage (48, 49) et qui est conçu de manière à pouvoir passer d'une position d'extraction (A), dans laquelle un mouvement des câbles de tension (3, 4) dans le sens de tension (SR) est bloqué conjointement par l'organe de blocage (48, 49), à une position de tension (S), dans laquelle un mouvement des câbles de tension (3, 4) dans le sens d'extraction (AR) est bloqué conjointement par l'organe de blocage (48, 49), **caractérisé en ce que** les organes de tension (21, 22) sont conçus mobiles indépendamment l'un de l'autre dans le sens d'extraction (AR) lorsque le dispositif est dans la position d'extraction (A) et dans le sens de tension (SR) lorsque le dispositif est dans la position de tension (S).

2. Dispositif de tension (1) selon la revendication 1, **caractérisé en ce que** l'organe d'actionnement (9) peut être mis dans une position de freinage dans laquelle des surfaces de freinage (58, 59) agencées sur l'organe d'actionnement (9) et associées chacune à un organe de tension (21, 22) reposent sur des surfaces de frottement (35, 36) agencées sur les organes de tension (21, 22).

3. Dispositif de tension (1) selon la revendication 1 ou 2, **caractérisé en ce que** la position de tension (S) de l'organe d'actionnement (9) est agencée entre la position de freinage et la position d'extraction (A).

4. Dispositif de tension (1) selon l'une des revendications mentionnées ci-dessus, **caractérisé en ce qu'**il est prévu au moins un élément faisant ressort qui agit sur l'organe d'actionnement (9) en position de freinage et dont l'action s'étend globalement en direction de la position de tension (S).

5. Dispositif de tension (1) selon l'une des revendications mentionnées ci-dessus, **caractérisé en ce que** l'organe d'actionnement (9) comporte des prolongements de freinage (56, 57) par lesquels l'organe d'actionnement (9) est conçu de manière à pouvoir être guidé au moins par tronçon le long d'une course d'actionnement dans la coque (2, 5) et à l'extrémité desquels des surfaces de freinage (58, 59) sont agencées.

6. Dispositif de tension (1) selon l'une des revendications mentionnées ci-dessus, **caractérisé en ce qu'**il est agencé sur chaque organe de tension (21, 22) au moins un organe de blocage (48, 49) qui est logé dans la coque (2, 5) de manière à être mobile le long d'une course de déplacement (V) comportant une position de blocage (AP) et qui, dans la position de blocage (AP), se trouve en prise par concordance de forme et/ou par frottement avec l'organe de tension (21, 22) respectivement associé.

7. Dispositif de tension (1) selon la revendication 6, **caractérisé en ce qu'**il est prévu au moins un ressort de blocage (50, 51) qui est agencé de manière à agir sur l'organe de blocage (48, 49) et dont l'action s'effectue en direction de la position de blocage (AP).

8. Dispositif de tension (1) selon l'une des revendications 6 à 7, **caractérisé en ce qu'**il est prévu au moins deux éléments de butée (37, 38, 39, 40) qui sont logés dans la coque (2, 5), chacun d'un côté de la position de blocage (AP), de manière à être mobiles jusque dans la course de déplacement (V) et hors de celle-ci.

9. Dispositif de tension (1) selon l'une des revendications 6 à 8, **caractérisé en ce qu'**une commande à cames transmettant le mouvement de l'élément d'actionnement (9) aux éléments de butée (37, 38, 39, 40) est agencée entre les éléments de butée (37, 38, 39, 40) et l'élément d'actionnement (9).

10. Dispositif de tension (1) selon l'une des revendications 6 à 9, **caractérisé en ce que**, dans la position d'extraction (A), le premier élément de butée (39, 40) est déplacé d'un premier côté de la position de blocage (AP) jusque dans la course de déplacement (V) et l'autre élément de butée (37, 38) est déplacé de l'autre côté de la position de blocage (AP) hors de la course de déplacement (V).

11. Dispositif de tension (1) selon l'une des revendications 6 à 10, **caractérisé en ce que**, dans la position de tension (S), l'autre élément de butée (37, 38) est déplacé de l'autre côté de la position de blocage (AP) jusque dans la course de déplacement (V) et le premier élément de butée (39, 40) est déplacé du premier côté de la position de blocage (AP) hors de la course de déplacement (V).

12. Dispositif de tension (1) selon l'une des revendications 6 à 11, **caractérisé en ce qu'**il est prévu au moins un élément faisant ressort (45, 46) qui agit sur les éléments de butée (37, 38, 39, 40) et dont l'action s'étend globalement dans la direction de la course de déplacement (V) ou dans la direction opposée.

13. Dispositif de tension (1) selon l'une des revendications 6 à 12, **caractérisé en ce que** l'élément d'actionnement (9) comporte au moins un taquet (61, 64) qui, dans la position d'extraction (A) et/ou dans la position de tension (S), s'enclenche dans au moins une encoche (62, 63) agencée sur la coque (2, 5) et/ou sur l'élément de butée (37, 38, 39, 40).

14. Dispositif de tension (1) selon l'une des revendications 6 à 13, **caractérisé en ce que** les taquets (61, 64) ou les encoches (62, 63) sont formés dans une partie de l'élément de butée (37, 38, 39, 40) ou de l'organe d'actionnement (9).

15. Dispositif de tension (1) selon l'une des revendications 6 à 14, **caractérisé en ce que** les éléments de butée (37, 38, 39, 40) sont reliés entre eux par l'intermédiaire d'une bascule agencée dans la coque (2, 5).

16. Dispositif de tension (1) selon l'une des revendications mentionnées ci-dessus, **caractérisé en ce qu'**il est associé à chaque organe de tension (21, 22) au moins un élément faisant ressort (27, 28) qui est agencé entre l'organe de tension (21, 22) respectif et la coque (2, 5) et qui peut être précontraint dans le sens de tension (SR) et/ou dans le sens d'extraction (AR).

17. Dispositif de tension (1) selon l'une des revendications mentionnées ci-dessus, **caractérisé en ce que** l'organe d'actionnement comporte au moins un repère qui se retire optiquement de son environnement et qui est agencé sur au moins une surface partielle de l'organe d'actionnement (9) qui est située à l'extérieur de la coque (2, 5) lorsque le dispositif est dans la position d'extraction (A) et à l'intérieur de la coque (2, 5) lorsque le dispositif est dans la position de tension (S).

18. Dispositif de tension (1) selon l'une des revendications mentionnées ci-dessus, **caractérisé en ce que** la coque (2, 5) comporte au moins un logement (17) pour un crochet (10).

19. Dispositif de tension (1) selon l'une des revendications mentionnées ci-dessus, **caractérisé en ce que** les sens de tension (SR) des câbles de tension (3, 4) s'étendent globalement à l'opposé l'un de l'autre.

20. Dispositif de tension (1) selon l'une des revendications mentionnées ci-dessus, **caractérisé en ce que** les organes de tension (27, 28) sont agencés des deux côtés de l'organe d'actionnement (9).

21. Dispositif de tension (1) selon l'une des revendications mentionnées ci-dessus, **caractérisé en ce que** le dispositif de tension (1) est construit symétrique par rapport à un axe passant par l'organe d'actionnement (9).
